# EUROPÄISCHE PATENTSCHRIFT

(11) **EP 1 800 956 B1**
(45) Veröffentlichungstag und Bekanntmachung des Hinweises auf die Patenterteilung: **14.05.2008**
(21) Anmeldenummer: 05292521.1
(22) Anmeldetag: 25.11.2005
(51) Int. Cl.: B60R 16/02, H01R 35/02

(54) **Vorrichtung zur Signal- bzw. Stromübertragung zwischen Endstellen**
Device for signal and current transmission between terminal points
Dispositif de transmission de signal et courant entre deux points terminaux

(43) Veröffentlichungstag der Anmeldung: 27.06.2007
(73) Patentinhaber: Nexans, 75008 Paris (FR)
(72) Erfinder: Nachbauer, Otto, 92685 Floss (DE); Schröer, Frank, Dipl.-Ing., 92637 Weiden (DE)
(74) Vertreter: Döring, Roger

(56) Entgegenhaltungen:
- EP-A- 0 556 779
- US-A- 3 597 721
- US-A- 5 413 492
- US-A1- 2001 044 229
- US-A1- 2003 094 955
- US-A1- 2005 164 524

## Beschreibung

Die Erfindung bezieht sich auf eine Vorrichtung zur Signal- bzw. Stromübertragung zwischen relativ zueinander bewegbaren Endstellen, zwischen denen mindestens zwei in Windungen verlaufende, und in einer im wesentlichen kreisförmigen Kassette untergebrachte Flachband-Leitungen angeordnet sind, welche mindestens einen elektrischen Leiter aufweisen, an die an den Endstellen weiterführende Leitungen anschließbar sind und deren Länge größer als der Abstand der Endstellen voneinander ist, bei welcher die Kassette aus einem um ihre Achse drehbaren, mindestens zwei in Umfangsrichtung gegeneinander versetzte Endstellen tragenden Rotor und einem feststehenden, ebenfalls mindestens zwei in Umfangsrichtung gegeneinander versetzte Endstellen tragenden Stator besteht, die einen ringförmigen Wickelraum zur Aufnahme der Flachband-Leitungen zwischen sich einschließen, wobei zwischen je einer Endstelle des Rotors und einer Endstelle des Stators eine der Flachband-Leitungen derart angeordnet ist, daß sie mit mindestens einer ersten Windung am Rotor und nach Durchlaufen einer U-förmigen Umkehrstelle mit mindestens einer zweiten Windung am Stator anliegt, deren Wickelsinn zu dem der ersten Windung entgegengesetzt ist (EP 0 556 779 B1). Die EP-A-0 556 779 A zeigt die Merkmale des Oberbegriffs des Anspruchs 1.

Eine derartige Vorrichtung wird beispielsweise für die Übertragung eines Signals zum Auslösen des "Airbags" eines Prallschutzes für Kraftfahrzeuge benötigt. Sie ist zur Übertragung von elektrischen Signalen aber auch von elektrischem Strom im Lenkrad eines Kraftfahrzeugs untergebracht. Mit einer solchen Vorrichtung kann die Signal-und/oder Stromübertragung zwischen feststehenden und beweglichen Teilen des Kraftfahrzeugs ohne Schleifkontakte bzw. Schleifringe erfolgen. Statt der Worte "Flachband-Leitung" wird im folgenden die Abkürzung "FBL" verwendet.

Kraftfahrzeugs ohne Schleifkontakte bzw. Schleifringe erfolgen. Statt der Worte "Flachband-Leitung" wird im folgenden die Abkürzung "FBL" verwendet.

Durch die EP 0 417 350 A1 ist eine Vorrichtungen zur kontaktlosen Stromübertragung beispielsweise mittels einer nach Art eines Federhauses zu einem Wickelkörper gewickelten FBL bekanntgeworden. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf.

Aus der EP-0 735 631 B1 geht eine Vorrichtung zur Verbindung zweier relativ zueinander drehbarer Endstellen hervor, bei welcher der Wickelkörper in zwei Teilwicklungen mit gegenläufigem Wickelsinn und einer U-förmigen Umkehrstelle aufgeteilt ist, zwischen denen ein ringförmiger Führungskörper angeordnet ist. Die Umkehrstelle zwischen den Teilwicklungen greift in den Führungskörper ein, der bei einer Drehbewegung des Rotors von den ihren Durchmesser verändernden Teilwicklungen in Umfangsrichtung der Kassette mitgenommen wird. Der Führungskörper dient zur Führung und zur gegenseitigen Abstützung der Teilwicklungen: Er gleitet bei Betätigung der Vorrichtung auf einem zwischen Stator und Rotor befindlichen Boden einer entsprechenden Kassette. Störende Geräusche sind bei dieser Vorrichtung allein dadurch, aber auch durch Erschütterungen während der Fahrt oft nicht zu vermeiden. Der Führungskörper stellt außerdem ein zusätzliches Bauteil dar.

Die bekannte Vorrichtung nach der eingangs erwähnten EP 0 556 779 B1 arbeitet ohne separaten Führungskörper für die Teilwicklungen. Diese werden bei dieser Vorrichtung von mehreren FBL gebildet, von denen jede mit einer U-förmigen Umkehrstelle in der Kassette der Vorrichtung angeordnet ist. Jede FBL ist an ihren Enden mit einer Endstelle verbunden, von denen eine am Rotor der Kassette und die andere an deren Stator angebracht ist. Die Endstellen der einzelnen FBL sind in Umfangsrichtung der Kassette gegeneinander versetzt. Jede FBL liegt mit einer größeren Länge einerseits am Rotor und andererseits am Stator an. Die FBL sind elastisch ausgeführt und die Bereiche ihrer Umkehrstellen sind so stabil, daß die an Rotor und Stator liegenden Längen der FBL durch dieselben in Richtung beider Bauteile gedrückt werden. Bei einer Drehung eines mit einer solchen Kassette ausgerüsteten Lenkrades eines Fahrzeugs bewegen sich alle Umkehrstellen in Umfangsrichtung der Kassette. Da die FBL alle einzeln montiert und an den Endstellen kontaktiert werden müssen, ist die bekannte Vorrichtung aufwendig in ihrem Aufbau und bei ihrer Herstellung.

Der Erfindung liegt die Aufgabe zugrunde, die eingangs geschilderte Vorrichtung so zu gestalten, daß sie mit vereinfachtem Aufbau einfacher hergestellt werden kann.

Diese Aufgabe wird gemäß der Erfindung dadurch gelöst,
- daß alle in der Vorrichtung eingesetzten FBL mit einem gemeinsamen, ringartigen Leiterträger zu einer einteiligen, in Form einer gedruckten Schaltung ausgeführten Einheit zusammengefaßt sind, der in Montageposition im Wickelraum der Kassette angeordnet ist, und
- daß die Leiter der einzelnen FBL im Leiterträger ohne Unterbrechung weitergeführt sind.

Bei dieser Vorrichtung ist für die Übertragung von Signalen bzw. Strom nur noch ein einziges vorgefertigtes Bauteil zu montieren. Dieses aus dem Leiterträger und mindestens zwei FBL bestehende Bauteil kann als gedruckte Schaltung in sogenannter Flexprinttechnik hergestellt werden. Dabei sind im gemeinsamen Leiterträger alle Leiter der einzelnen FBL in erforderlicher Länge weitergeführt, die eine elektrisch leitende Verbindung zu der jeweils zugehörigen Endstelle sicherstellt. Beim Aufbau einer Kassette mit dieser Vorrichtung braucht nur noch der Leiterträger beispielsweise auf einen Boden des zwischen Rotor und Stator vorhandenen Wickelraums der Kassette gelegt und auf einer Seite mit den dort befindlichen Endstellen verbunden zu werden. Anschließend werden nacheinander die einzelnen FBL mit U-förmigen Umkehrstellen gebogen, sowohl an den Stator als auch an den Rotor angelegt und an ihren Enden mit den jeweils anderen Endstellen verbunden.

Ein Ausführungsbeispiel des Erfindungsgegenstandes ist in den Zeichnungen dargestellt.

Es zeigen:
Fig. 1 eine Draufsicht auf eine offene Kassette für einen Airbag mit einer Vorrichtung nach der Erfindung in schematischer Darstellung.
Fig. 2 einen Schnitt durch eine Kassette nach Fig. 1.
Fig. 3 eine schematische Ansicht einer in der Vorrichtung verwendbaren FBL - Einheit in vergrößerter Darstellung.

Aufbau und Anordnung einer Vorrichtung mit einer im Lenkrad eines Fahrzeugs zu montierenden Kassette sind grundsätzlich bekannt und beispielsweise in den eingangs erwähnten Schriften beschrieben. Auf entsprechende Einzelheiten wird deshalb hier nicht weiter eingegangen.

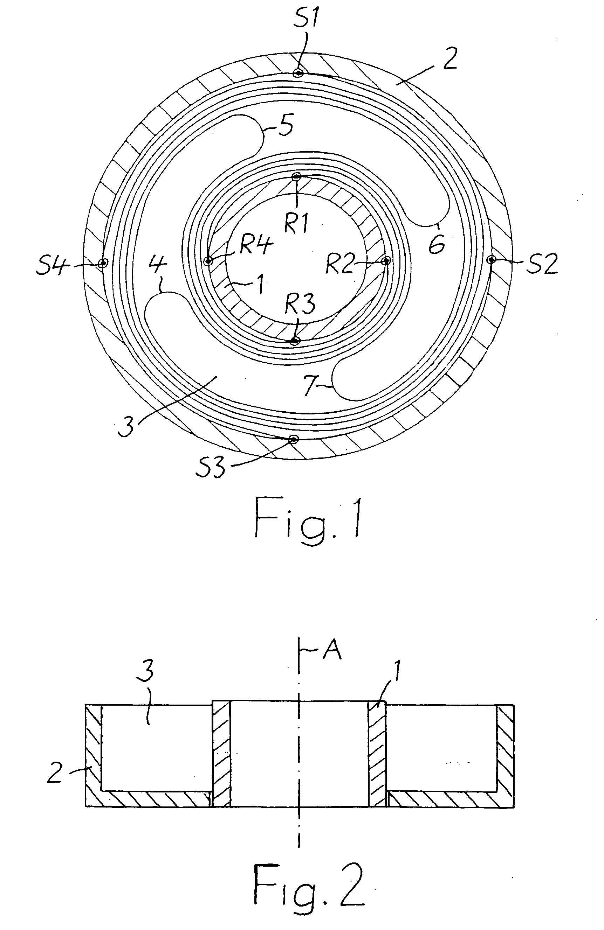

ln der Vorrichtung nach der Fig. 1 und 2 ist eine Kassette verwendet, die einen um eine Achse A drehbaren Rotor 1 und einen Stator 2 aufweist. Von beiden Teilen sind in Fig. 1 schematisch nur kreisförmige Wände dargestellt. Zwischen Rotor 1 und Stator 2 ist ein Wickelraum 3 vorhanden, in dem im dargestellten Ausführungsbeispiel vier FBL 4, 5, 6 und 7 angeordnet sind. Der Rotor 1 trägt vier in Umfangsrichtung gegeneinander versetzte Endstellen R1, R2, R3 und R4, während am Stator 2 vier ebenfalls in Umfangsrichtung gegeneinander versetzte Endstellen S1, S2, S3 und S4 angebracht sind. Jede der vier FBL 4, 5, 6 und 7 ist mit je einer der Endstelen des Rotors 1 und des Stators 2 verbunden und in denselben elektrisch leitend so angeschlossen, daß weiterführende Leitungen elektrisch leitend anschließbar sind. Dazu sind die vier Endstellen R1 bis R4 einerseits und S1 bis S4 andererseits durch Verbindungsleitungen miteinander verbunden und jeweils an einer Stelle des Rotors 1 einerseits und des Stators 2 andererseits zusammengefaßt.

Die vier FBL 4 bis 7 sind entsprechend der Erfindung zusammen mit einem ringartigen Leiterträger 8 zu einer einteiligen Einheit zusammengefaßt. Die Leiter der FBL 4 bis 7 sind ohne Unterbrechung bis in den Leiterträger 8 hineingeführt und reichen dort bis in den Bereich der Endstellen, mit denen sie zu verbinden sind. Die Einheit aus FBL 4 bis 7 und Leiterträger 8 ist als gedruckte Schaltung in sogenannter Flexprinttechnik ausgeführt. Sie ist dadurch in bekannter Technik sehr einfach und präzise herstellbar.

Der Leiterträger 8 ist ringartig ausgeführt und so bemessen, daß er unter Umschließung des Rotors 1 in den Wickelraum 3 der Kassette eingebracht werden kann. Seine Abmessungen sind mit Vorteil so gewählt, daß der Leiterträger 8 möglichst genau in den Wickelraum 3 paßt und beispielsweise auf dessen Boden gelegt werden kann. Er ist dazu mit Vorteil kreisringförmig ausgeführt, kann aber auch eine andere geometrische ringartige Form haben. Seine Breite entspricht dann vorzugsweise sehr genau dem radialen Abstand der Wände von Rotor 1 und Stator 2 voneinander. Die vier FBL 4 bis 7 können alle gleich lang sein. Sie können aber auch unterschiedliche Längen haben.

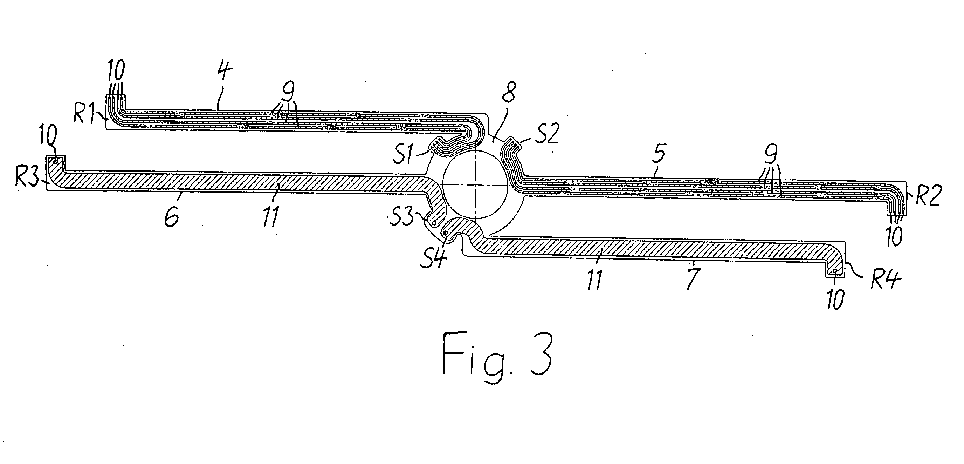

In Fig. 3 ist eine aus einem Leiterträger 8 und vier FBL 4 bis 7 bestehende Einheit schematisch dargestellt, die mit Vorteil in Flexprinttechnik hergestellt ist. Die FBL 4 und 5 haben im dargestellten Ausführungsbeispiel jeweils vier Leiter 9, die am Ende der beiden FBL in Lötösen 10 enden. Es können dort aber auch Kontaktstifte an die Leiter 9 angeschlossen sein, die ebenso wie die Lötösen 10 bei der Herstellung der Einheit aus Leiterträger 8 und FBL 4 bis 7 in Flexprinttechnik gleichzeitig mit erzeugt werden können.

Die Leiter 9 sind ohne Unterbrechung in den Leiterträger 8 hineingeführt und in demselben mit einer solchen Länge weitergeführt, daß sie bis zu den Entstellen S1 bis S2 des Stators 2 reichen. Auch an diesen Enden der Leiter können Lötösen bzw. Kontaktstifte in Flexprinttechnik mit angeformt sein. Die freien Enden der FBL 4 und 5 liegen in Montagestellung in den Endstellen R 1 und R2 des Rotors 1 der Kassette.

Der gleiche Sachverhalt gilt für die FBL 6 und 7, die im dargestellten Ausführungsbeispiel nur einen Leiter 11 mit größerem leitendem Querschnitt zur Übertragung höherer Ströme haben, beispielsweise für eine Lenkradheizung. Die FBL 6 und 7 liegen zwischen den Endstellen S3 und S4 einerseits sowie R3 und R4 andererseits.

Die Einheit aus Leiterträger 8 und FBL ist im dargestellten Ausführungsbeispiel mit vier FBL 4 bis 7 wiedergegeben. Es sollen mindestens zwei FBL sein. Die Einheit kann aber auch drei oder mehr als vier FBL aufweisen. Die Anzahl der Leiter in den einzelnen FBL kann unterschiedlich sein. Es können zwei oder mehr Leiter vorhanden sein.

Zur Herstellung einer Vorrichtung nach der Erfindung wird beispielsweise eine aus Fig. 3 in Flexprinttechnik hergestellte Einheit aus Leiterträger 8 und FBL 4 bis 7 in eine aus den Fig. 1 und 2 ersichtliche Kassette eingebracht. Dazu wird der Leiterträger 8 auf den Boden des Wickelraums 3 gelegt, mit seitwärts bzw. nach oben abstehenden FBL 4 bis 7. Anschließend werden die FBL 4 bis 7 nacheinander so gebogen, wie es aus Fig. 1 hervorgeht und mit ihren freien Enden mit jeweils einer der Endstellen von Rotor 1 oder Stator 2 verbunden. Danach kann die Kassette in üblicher Technik fertiggestellt werden.

## Patentansprüche

1. Vorrichtung zur Signal- bzw. Stromübertragung zwischen relativ zueinander bewegbaren Endstellen, zwischen denen mindestens zwei in Windungen verlaufende, in einer im wesentlichen kreisförmigen Kassette untergebrachte Flachband-Leitungen angeordnet sind, welche mindestens einen elektrischen Leiter aufweisen, an die an den Endstellen weiterführende Leitungen anschließbar sind und deren Länge größer als der Abstand der Endstellen voneinander ist, bei welcher die Kassette aus einem um ihre Achse drehbaren, mindestens zwei in Umfangsrichtung gegeneinander versetzte Endstellen tragenden Rotor und einem feststehenden, ebenfalls mindestens zwei in Umfangsrichtung gegeneinander versetzte Endstellen tragenden Stator besteht, die einen ringförmigen Wickelraum zur Aufnahme der Flachband-Leitungen zwischen sich einschließen, wobei zwischen je einer Endstelle des Rotors und einer Endstelle des Stators eine der Flachband-Leitungen derart angeordnet ist, daß sie mit mindestens einer ersten Windung am Rotor und nach Durchlaufen einer U-förmigen Umkehrstelle mit mindestens einer zweiten Windung am Stator anliegt, deren Wickelsinn zu dem der ersten Windung entgegengesetzt ist, **dadurch gekennzeichnet,**
- **daß** alle in der Vorrichtung eingesetzten Flachband-Leitungen (4-7) mit einem gemeinsamen, ringartigen Leiterträger (8) zu einer einteiligen, in Form einer gedruckten Schaltung ausgeführten Einheit zusammengefaßt sind, der in Montageposition im Wickelraum (3) der Kassette angeordnet ist, und
- **daß** die Leiter (9) der einzelnen Flachband-Leitungen (4-7) im Leiterträger (8) ohne Unterbrechung weitergeführt sind.

2. Vorrichtung nach Anspruch 1, **dadurch gekennzeichnet, daß** der Leiterträger (8) kreisringförmig ausgebildet ist.

3. Vorrichtung nach Anspruch 2, **dadurch gekennzeichnet, daß** die Abmessungen des Leiterträgers (8) den radialen Abmessungen des Wickelraums (3) entsprechen.

4. Vorrichtung nach einem der Ansprüche 1 bis 3, **dadurch gekennzeichnet, daß** der Wickelraum (3) durch einen rechtwinklig zu Rotor (1) und Stator (2) verlaufenden Boden abgeschlossen ist, auf dem der Leiterträger (8) in Montageposition aufliegt.

5. Vorrichtung nach einem der Ansprüche 1 bis 4, **dadurch gekennzeichnet, daß** an den freien Enden der Leiter (9) der Flachband-Leitungen (4-7) Kontaktelemente angeformt sind, wie Lötösen (10) oder Kontaktstifte.

## Claims

1. Device for transmitting signals or current between end points which can be moved relative to one another and between which at least two flat ribbon lines extending in turns and accommodated in an essentially circular cassette are arranged which have at least one electrical conductor, to which lines continuing at the end points can be connected and the length of which is greater than the distance between the end points, in which the cassette consists of a rotor, which is rotatable about its axis and carries at least two end points offset with respect to one another in the circumferential direction, and a stationary stator also carrying at least two end points which are offset with respect to one another in the circumferential direction, which enclose between them an annular winding space for accommodating the flat ribbon lines, one of the flat ribbon lines being arranged between one end point each of the rotor and one end point of the stator, in such a manner that it rests against the rotor with at least one first turn and, after passing through a U-shaped reversing point, against the stator with at least one second turn, the direction of winding of which is opposite to that of the first turn, **characterized in that**
- all flat ribbon lines (4-7) used in the device are combined, together with a common annular conductor support (8), to form a one-piece unit constructed in the form of a printed circuit, which is arranged in the winding space (3) of the cassette in the assembled position, and
- the conductors (9) of the individual flat ribbon lines (4-7) are continued without interruption in the conductor support (8).

2. Device according to Claim 1, **characterized in that** the conductor support (8) is annularly constructed.

3. Device according to Claim 2, **characterized in that** the dimensions of the conductor support (8) correspond to the radial dimensions of the winding space (3).

4. Device according to one of Claims 1 to 3, **characterized in that** the winding space (3) is closed off by a bottom extending at right angles to the rotor (1) and stator (2), on which the conductor support (8) lies in the assembled position.

5. Device according to one of Claims 1 to 4, **characterized in that** contact elements such as solder lugs (10) or contact pins are moulded on at the free ends of the conductors (9) of the flat ribbon lines (4-7).

## Revendications

1. Dispositif pour la transmission de signal ou de courant entre des stations terminales pouvant être déplacées les unes par rapport aux autres, entre lesquelles sont disposées au moins deux lignes à ruban s'étendant dans des enroulements et logées dans une cassette sensiblement circulaire, lesquelles lignes présentent au moins un conducteur électrique, conducteurs auxquels des lignes continuant .sur les stations terminales peuvent être raccordées et dont la longueur est supérieure à l'espacement des stations terminales, dans lequel la cassette est composée d'un rotor pouvant tourner autour de son axe, portant au moins deux stations terminales décalées dans le sens périphérique l'une par rapport à l'autre et d'un stator fixe, portant également au moins deux stations terminales décalées l'une par rapport à l'autre dans le sens périphérique, lesquels incluent entre eux un espace d'enroulement annulaire pour le logement des lignes à ruban, l'une des lignes à ruban étant disposée entre respectivement une station terminale du rotor et une station terminale du stator de telle sorte qu'elle s'appuie par au moins un premier enroulement sur le rotor et, après le passage par un point d'inversion en U, par au moins un second enroulement sur le stator, dont le sens d'enroulement est opposé à celui du premier enroulement, **caractérisé en ce que**,
- toutes les lignes à ruban (4-7) utilisées dans le dispositif sont regroupées avec un support de conducteur (8) commun et de type annulaire en une unité d'une seule pièce, réalisée sous la forme d'un circuit imprimé, lequel support est disposé dans la position de montage dans l'espace d'enroulement (3) dans la cassette, et
- **en ce que** les conducteurs (9) des lignes à ruban (4-7) individuelles sont poursuivis dans le support de conducteur (8) sans interruption.

2. Dispositif selon la revendication 1, **caractérisé en ce que** le support de conducteur (8) est réalisé avec une forme d'anneau circulaire.

3. Dispositif selon la revendication 2, **caractérisé en ce que** les dimensions du support de conducteur (8) correspondent aux dimensions radiales de l'espace d'enroulement (3).

4. Dispositif selon l'une quelconque des revendications 1 à 3, **caractérisé en ce que** l'espace d'enroulement (3) est terminé par un fond s'étendant perpendiculairement au rotor (1) et au stator (2), sur lequel le support de conducteur (8) repose dans la position de montage.

5. Dispositif selon l'une quelconque des revendications 1 à 4, **caractérisé en ce que** sur les extrémités libres des conducteurs (9) des lignes à ruban (4-7) sont formés des éléments de contact, comme des cosses à souder (10) ou des broches de contact.
